# EUROPEAN PATENT SPECIFICATION

(11) **EP 3 676 337 B1**
(45) Date of publication and mention of the grant of the patent: **15.03.2023**
(21) Application number: 18826831.2
(22) Date of filing: 15.05.2018
(51) Int. Cl.: C09D 5/36, C09D 5/02, C08L 33/08

(54) **A PIGMENT DISPERSION COMPOSITION AND METALLIC LUSTROUS GLOVES DERIVED THEREFROM**
PIGMENTDISPERSIONSZUSAMMENSETZUNG UND DAVON ABGELEITETE METALLISCH GLÄNZENDE HANDSCHUHE
COMPOSITION DE DISPERSION DE PIGMENT ET GANTS LUSTRÉS MÉTALLIQUES DÉRIVÉS DE CELLE-CI

(30) Priority: 29.08.2017 MY PI2017703195
(43) Date of publication of application: 08.07.2020
(73) Proprietor: Top Glove International SDN. BHD., Klang, Selangor 41050 (MY)
(72) Inventor: WONG, Chong Ban, 41050 Klang Selangor (MY); BINTI MOHAMAD, Nuriah, 41050 Klang Selangor (MY); BINTI MD NOOR, Norsuriati, 41050 Klang Selangor (MY); A/P T. RAGUNATHAN, Sreleka, 41050 Klang Selangor (MY)
(74) Representative: Espiell Gomez, Ignacio
(86) International application number: PCT/MY2018/050030
(87) International publication number: WO 2019/045556

(56) References cited:
- CN-A- 102 732 110
- CN-A- 106 280 826

## Description

### FIELD OF TECHNOLOGY

The present invention relates generally to a pigment dispersion composition suitable for use in producing gloves having a metallic lustrous appearance.

### BACKGROUND OF THE INVENTION

Colour on gloves are usually used to indicate material, whether they are latex or non-latex gloves. Further, it can be used to indicate purpose, such as for laboratory use, surgery use, or food preparation. Gloves with metallic lustrous appearance are desirable because of its visually pleasing appearance especially for skincare, spa, salon and other cosmetic related business.

There are a few patented technologies related to production of gloves having metallic lustrous appearance. For instance, Chinese Patent Application Publication No. CN 1807493 A disclosed a recipe and method for manufacturing a kind of rubber glove which has pearl gloss. More particularly, a pearlescent pigment dispersion composition was disclosed. The pearlescent pigment dispersion composition comprises pearlescent pigments in 20% to 40%, a dispersant in 1% to 2%, a stabilizer in 0.04% to 0.1%, and the balance being soft water. The dispersant used was methylene bis-naphthalene sulfonate, ethylene oxide, casein, or a combination thereof.

Another example is disclosed by Chinese Patent Application Publication No. CN103554568 A. More particularly, CN 103554568 A disclosed a formula of rubber gloves comprises the following components in parts by weight: 30-50% of luminous pigment, 1-2% of dispersing agent, 0.04-0.1% of stabilizing agent, 3-6% of oxidizing agent, 2-5% of zinc oxide and the balance of soft water.

In view of the above, both CN 1807493 A and CN103554568 A disclosed the use of ethylene oxide (EO) as dispersing agent. However, the addition of EO causes formation of foam in latex compounding that can contribute to formation of pinhole in gloves.

Documents CN106280826 and CN102732110 disclose other compositions based on pearl pigment powder. Those compositions can only contain up to 12,5 or 15% of this pigment, and is not disclosed for use in latex.

It was found that unstable pearlescent pigment often forms large amount of sediment in a latex compounding. Thus far, there is no found prior art capable of producing a pigment dispersion composition without hard sediment for a period 3 months after mixing with a latex compounding. This invention provides an alternative pigment dispersion composition suitable for use in producing gloves having a metallic lustrous appearance. More particularly, the pigment dispersion composition is able to reduce the amount of pigment sediment in a dipping tank.

Document CN102732110A discloses an aqueous metallic flashing paint, which comprises a component A, a component B, a pH conditioning agent and a thickening agent. The formula and contents of each ingredient are as follows: the component A contains, by weight, 10-60% of water, 0.1-0.2% of cellulose ether, 0.1-2.0% of a dispersant, 0.1-1.0% of a wetting agent, 0.5-2.0% of an antifoaming agent, 0.1-3.0% of a pH conditioning agent, 8-15% of a pigment, and 5-15% of a filling material; and the component B contains by weight, 5-60% of water, 10-40% of an emulsion, 0.2-2.0% of a film forming auxiliary agent, 0.5-2.0% of an antiseptic, 0.5-2.0% of a bactericide, 0.5-5.0% of an antifoaming agent and 1-8% of a thickening agent.

Document CN106280826A discloses a pearlescent paint prepared by mixing a base paint and a slurry according to the weight ratio of 1:1. The preparation method comprises the following steps: A) base paint preparation: uniformly stirring cellulose, adding an emulsion, water, a bactericide, a defoaming agent, an antifreeze agent, a first thickener, a film forming aid, a suspension, a pH regulator, a second thickener and a wetting agent, and uniformly dispersing the base paint; B) slurry preparation: uniformly dispersing pearl powder in water, regulating the viscosity with a thickener, and adding a cosolvent, a dispersing agent, a defoaming agent and a thickener, thereby preparing the slurry; and C) uniformly mixing the base paint and slurry according to the ratio of 1:1, and regulating to the proper viscosity.

### SUMMARY OF THE INVENTION

The present invention is defined in the appended claims.

One object of the present invention is to provide a pigment dispersion composition for producing gloves having a metallic lustrous appearance.

One object of the invention is to provide a pigment dispersion composition suitable for latex compounding, such that it reduces the amount of pigment sediment in a dipping tank.

One object of the present invention is to provide a coloured glove suitable for various applications such as for use in the field of cosmetic, for example, skincare, spa centres, hair or makeup salons.

At least one of the preceding objects is met, in whole or in part, by the present invention, in which one of the embodiments of the present invention is a pigment dispersion composition capable for use in producing gloves having metallic lustrous appearance, comprising: 20 to 40 wt % of pearl pigment powder; 0.01 to 10 wt% of dispersing agent; 0.01 to 10 wt% of rheology modifier and water, characterised in that the dispersing agent is sodium salt of polyacrylic acid, and maleic acid-acrylic acid copolymer, or salts derived thereof.

Preferably, the rheology modifier is a mixture comprising 0.01 to 10 wt% of pH adjuster and 0.01 to 10 wt% of thickener. Preferably, the pH adjuster is potassium hydroxide, sodium hydroxide, or ammonium hydroxide.

Preferably, the thickener is acrylic copolymer or hydroxyethylcellulose.

Advantageously, the pearl pigment powder has a particle size of less than or equal to 20 µm.

### BRIEF DESCRIPTION OF THE INVENTION

This invention relates to a pigment dispersion composition suitable for use in producing gloves having a metallic lustrous appearance.

Exemplary, non-limiting embodiments of the invention will be disclosed. However, it is to be understood that limiting the description to the preferred embodiments of the invention is merely to facilitate discussion of the present invention and it is envisioned that those skilled in the art may devise various modifications without departing from the scope of the appended claim.

The present invention is a pigment dispersion composition comprising 20 to 40 wt % of pearl pigment powder; 0.01 to 10 wt% of dispersing agent; 0.01 to 10 wt% of rheology modifier; and water, characterised in that the dispersing agents is sodium salt of polyacrylic acid, and maleic acid-acrylic acid copolymer, or salts derived thereof.

In the preferred embodiment, the pigment dispersion composition is a dispersion having 20 to 40 % of solid content, a Brookfield viscosity less than 2000 (cP), preferably 500 to 1800 (cP), a specific gravity at 25° C of 1.1 to 1.3 g/cm2, and a pH of 8 to 10. It is preferred that the pigment dispersion composition is stirred for 24 to 48 hours prior to use.

In accordance to preceding description, the pigment dispersion composition comprises a rheology modifier. Preferably, the rheology modifier in the present invention is a mixture comprising 0.01 to 10 wt% ofpH adjuster and 0.01 to 10 wt% of thickener. The pH adjuster provides stable pH environment while the thickener increases viscosity of the dispersion composition. This provides a stable environment for the dispersion composition. The pH adjuster can be potassium hydroxide (KOH), sodium hydroxide (NaOH), or ammonium hydroxide (NH4OH). The thickener is acrylic copolymer or hydroxyethylcellulose.

The pearl pigment powder is preferably mica oxide, but not limited thereto. Pearl pigment powder having specific density of 2.9 to 3.0 g/cm2 can be used. As pearl pigment powder having a fine particle size provides better sparkling effect on the gloves, the pearl pigment powder used can be subjected to ball milling, or any suitable process in the art, so as to reduce its particle size. More preferably, the pearl pigment powder in the pigment dispersion composition has a particle size of less than or equal to 20 µm, more particularly in a range of 5 to 20 µm. Table 1 shows the correlation between particle size of pigment dispersion composition and its separation rate upon mixing with a compounding blend of copolymer of acrylonitrile and butadiene without milling. As a result, the dispersion is able to stay without hard sediment for a period 3 months with the separation rate less than 85mm/month.

**Table 1 : Correlation between particle size and separation rate of pigment dispersion composition in a preferred embodiment of the invention.**

| **Set** | **Particle size (µm)** | **Separation rate (mm/month)** | **Type of sediment** |
|---|---|---|---|
| 1 | 17.4 | 20.1 | Soft |
| 2 | 17.0 | 12.2 | Soft |
| 3 | 17.2 | 13.4 | Soft |

Water used in the pigment dispersion can be tap water, but not limited thereto. Alternatively, soft water can also be used due to its low concentration of ions, particularly calcium and magnesium ions. This can reduce the reaction of ions with the dispersing agent.

The aforementioned pigment dispersion composition is suitable for use in latex compounding for producing natural rubber gloves, nitrile gloves, polyisoprene glove, or polychloroprene gloves. More particularly, the pigment dispersion composition in the present invention is used for producing nitrile gloves, in which the latex compounding includes copolymer of acrylonitrile and butadiene, carboxylated copolymer of acrylonitrile and butadiene, or a mixture thereof. Preferably, 1 to 10 % by weight of the pearl pigment composition can be added into a latex compounding so as to produce gloves having metallic lustrous appearance. Higher pearl pigment dispersion composition used will give better lustrous effect on glove samples produced. Conventional glove manufacturing procedures known in the art can be applied.

### EXAMPLE

An exemplary embodiment of the pigment dispersion composition is disclosed.

### EXAMPLE 1

At approximately 25 °C, 23 kg of pearl pigment powder having particle size of approximately 20 µm, 1 to 10 kg of rheology modifier, 1 kg to 10 kg of dispersing agent (a mixture of sodium salt of polyacrylic acid and maleic acid-acrylic acid copolymer) were added into 60 kg of tap water in the presence of continuous stirring. A metallic white dispersion is obtained. The dispersion has 27 % of solid content, a Brookfield viscosity at 25° C of 1800 Cp, a specific gravity at 25° C of 1.10 to 1.30 g/cm2, and a pH of 8 to 10. The dispersion was stirred for 24 to 48 hours and kept for storage. The dispersion is able to stay without hard sediment for period 3 months with the separation rate less than 85mm/month. Thereinafter, of the dispersion was added into a dipping tank having conventional latex compounding for producing nitrile rubber gloves. Procedures known in the art for producing gloves can be applied.

The present invention may be embodied in other specific forms without departing from its essential characteristics. The described embodiments are to be considered in all aspects only as illustrative and not restrictive. The scope of the invention is, therefore indicated by the appended claims rather than by the foregoing description.

## Claims

1. Use of a pigment dispersion composition for producing gloves having metallic lustrous appearance, wherein the pigment dispersion composition comprises:
20 to 40 wt% of pearl pigment powder;
0.01 to 10 wt% of a dispersing agent;
0.01 to 10 wt% of a rheology modifier; and
water,
and wherein the dispersing agent is sodium salt of polyacrylic acid, and maleic acid-acrylic acid copolymer, or salts derived thereof.

2. The use of a pigment dispersion composition according to claim 1, wherein the rheology modifier in the pigment dispersion composition is a mixture comprising 0.01 to 10 wt% of a pH adjuster and 0.01 to 10 wt% of a thickener.

3. The use of a pigment dispersion composition according to claim 2, wherein the pH adjuster in the pigment dispersion composition is potassium hydroxide, sodium hydroxide, or ammonium hydroxide.

4. The use of a pigment dispersion composition according to any one of claims 2 to 3, wherein the thickener in the pigment dispersion composition is acrylic copolymer, or hydroxyethylcellulose.

5. The use of the pigment dispersion composition according to any one of the previous claims for producing latex gloves having metallic lustrous appearance.

## Patentansprüche

1. Verwendung einer Pigmentdispersionszusammensetzung zur Herstellung von Handschuhen, die ein metallisch glänzendes Aussehen haben, wobei die Pigmentdispersionszusammensetzung umfasst:
20 bis 40 Gew.-% Perlpigmentpulver;
0,01 bis 10 Gew.-% eines Dispergiermittels;
0,01 bis 10 Gew.-% eines Rheologie-Modifikators; und
Wasser,
und wobei das Dispergiermittel Natriumsalz von Polyacrylsäure und Maleinsäure-Acrylsäure-Copolymer oder davon abgeleitete Salze ist.

2. Verwendung einer Pigmentdispersionszusammensetzung nach Anspruch 1, wobei der Rheologie-Modifikator in der Pigmentdispersionszusammensetzung eine Mischung ist, die 0,01 bis 10 Gew.-% eines pH-Einstellmittels und 0,01 bis 10 Gew.-% eines Verdickungsmittels umfasst.

3. Verwendung einer Pigmentdispersionszusammensetzung nach Anspruch 2, wobei das pH-Einstellmittel in der Pigmentdispersionszusammensetzung Kaliumhydroxid, Natriumhydroxid oder Ammoniumhydroxid ist.

4. Verwendung einer Pigmentdispersionszusammensetzung nach einem der Ansprüche 2 bis 3, wobei das Verdickungsmittel in der Pigmentdispersionszusammensetzung Acrylcopolymer oder Hydroxyethylcellulose ist.

5. Verwendung der Pigmentdispersionszusammensetzung nach einem der vorhergehenden Ansprüche zur Herstellung von Latexhandschuhen, die ein metallisch glänzendes Aussehen haben.

## Revendications

1. Utilisation d'une composition de dispersion de pigment pour la production de gants ayant un aspect métallique brillant, dans laquelle la composition de dispersion de pigment comprend :
20 à 40 % en poids de poudre de pigment nacré ;
0,01 à 10 % en poids d'un agent dispersant ;
0,01 à 10 % en poids d'un modificateur de rhéologie ; et
de l'eau,
et dans laquelle l'agent dispersant est un sel de sodium de poly(acide acrylique), et un copolymère d'acide maléique-acide acrylique, ou des sels dérivés de celuici.

2. Utilisation d'une composition de dispersion de pigment selon la revendication 1, dans laquelle le modificateur de rhéologie dans la composition de dispersion de pigment est un mélange comprenant 0,01 à 10 % en poids d'un agent d'ajustement du pH et 0,01 à 10 % en poids d'un épaississant.

3. Utilisation d'une composition de dispersion de pigment selon la revendication 2, dans laquelle l'agent d'ajustement du pH dans la composition de dispersion de pigment est l'hydroxyde de potassium, l'hydroxyde de sodium, ou l'hydroxyde d'ammonium.

4. Utilisation d'une composition de dispersion de pigment selon l'une quelconque des revendications 2 à 3, dans laquelle l'épaississant dans la composition de dispersion de pigment est un copolymère acrylique, ou l'hydroxyéthylcellulose.

5. Utilisation de la composition de dispersion de pigment selon l'une quelconque des revendications précédentes pour la production de gants en latex ayant un aspect métallique brillant.
